# EUROPÄISCHE PATENTANMELDUNG

(11) **EP 2 988 007 A1**
(43) Veröffentlichungstag der Anmeldung: **24.02.2016**
(21) Anmeldenummer: 15181438.1
(22) Anmeldetag: 18.08.2015
(51) Int. Cl.: F16B 7/04, E06B 3/968, F16B 37/06

(54) **ROHRVERBINDER**

(30) Priorität: 21.08.2014 DE 202014103897 U
(71) Anmelder: Richard Brink GmbH & Co. KG, 33758 Schloss Holte-Stukenbrock (DE)
(72) Erfinder: BRINK, Matthias, 33758 Schloß Holte-Stukenbrock (DE)
(74) Vertreter: Dantz, Jan Henning

(57) **Zusammenfassung**

Ein Rohrverbinder, der in die einander zugewandten und stirnseitig aneinander liegenden Endbereiche von Rohren, insbesondere Profilrohren einsteckbar ist und der zwei parallel und abständig zueinander angeordnete Deckplatten (2) und mindestens einen Abstandshalter (3) aufweist, der zur Verschiebesicherung mit den Deckplatten (2) verbunden ist, wobei die Deckplatten (2) und/oder der Abstandshalter (3) Aufnahmen für Verbindungsschrauben aufweisen, ist so ausgebildet, dass der Abstandshalter (3) ausschließlich formschlüssig und zerstörungsfrei lösbar mit den Deckplatten (2) verbunden ist.

## Beschreibung

Die Erfindung betrifft einen in die einander zugewandten und stirnseitig aneinander liegenden Endbereiche von Rohren, insbesondere Profilrohren, einsteckbaren Rohrverbinder sowie einen aus Profilrohren als Rahmenholmen gebildeten Rahmen.

Rohrverbinder, insbesondere solche, mit denen Profilrohre miteinander verbunden werden, sind hinlänglich bekannt.

Zum Verbinden von Rohren, die stirnseitig aneinander liegen und fluchten, d.h. gleichachsig verlaufen, wird ein Rohrverbinder in die Endbereiche der Rohre eingesteckt, wobei solche Rohrverbinder vor allem bei Rundrohren Verwendung finden. Die Befestigung des Rohrverbinders in beiden Rohren kann klemmend erfolgen, wozu diverse Spannmittel am Rohrverbinder vorgesehen sind, die über von außen zu betätigende Schrauben oder dergleichen spannbar sind.

Abgesehen von der begrenzten Klemmkraft, die den Einsatz solch eines Rohrverbinders für hohe Belastungen ausschließt, ist dieser für die Verbindung von winklig zueinander stehenden Rohren eher ungeeignet.

Hierzu kommen Rohrverbinder zum Einsatz, die nicht in die Rohre eingeschoben werden, sondern, bei Profilrohren, in außenseitig angeordneten Längsnuten positioniert sind. Allerdings ist hiermit nur eine Verbindung möglich, bei der die Rohre stumpf aneinander liegen. Auf Gehrung geschnittene Rohre hingegen sind damit nicht verbindbar.

Um auch solche Rohre miteinander zu verbinden, beispielsweise aus optischen Gründen, um eine offene Stirnseite zu vermeiden, die gegebenenfalls mit einer separaten Kappe zu verschließen ist, werden solche Rohre stoffschlüssig, d.h. üblicherweise durch Verschweißen, miteinander verbunden.

Dies führt jedoch zu Verspannungen der Profilrohre, bis zu deren Durchbiegen, so dass ein derartig hergestellter Rahmen vielfach nicht den geforderten Ansprüchen genügt.

Überdies ist gerade dann, wenn solche Rahmen dekorative Zwecke erfüllen sollen, eine Nachbearbeitung der Schweißnähte erforderlich, die sich vor allem dann als problematisch zeigt, wenn als Profilrohre solche aus Leichtmetall, insbesondere aus Aluminium mit einer Oberflächenbeschichtung Verwendung finden.

Da Rahmen, die aus miteinander verschweißten, aus Profilrohren gebildeten Rahmenholmen bestehen, auch in Anwendungsbereichen zum Einsatz kommen, die eine Demontage erfordern, ist der feste Verbund der Rahmenholme durch Schweißen für eine sinnvolle und kostengünstige Demontage hinderlich.

In der DE 21 62 381 A ist ein Rohrverbinder entsprechend der Gattung offenbart, der zwei parallel und abständig zueinander angeordnete Deckplatten und mehrfach abgewinkelte Abstandshalter aufweist, die zur Verschiebesicherung der Deckplatten zueinander Zungen aufweist, die in Schlitze der Deckplatten eingesteckt und damit durch Nieten unlösbar verbunden sind.

Dabei wird ein solcher Rohrverbinder so weit vorgefertigt, dass im Anschluss die Rohre auf die gebildeten Schenkel aufgesteckt werden können.

Allerdings ergeben sich bei dieser Konstruktion deutliche Nachteile, sowohl hinsichtlich des Einsatzbereiches wie auch hinsichtlich der Verwendbarkeit.

Eine Demontage des Rohrverbinders bzw. ein Zusammenbau erst an Ort und Stelle, also dann, wenn aus den Rohren beispielsweise ein Rahmen generiert werden soll oder dieser Rahmen nach Gebrauch wie z.B. nach Abbau eines Messestandes, ist nicht möglich, so dass die Rohrverbinder, wie sie für den genannten Messestand erforderlich sind, einen erheblichen Lagerraum beanspruchen.

Überdies entstehen durch das Nieten an den Zungen Nietköpfe, die gegenüber den Deckplatten vorstehen und so eine passgenaue Anlage der Deckplatten an der Innenwandung des jeweiligen Rohres verhindern, wodurch sich unter Umständen ein instabiler Rahmen ergibt.

Der Erfindung liegt die Aufgabe zugrunde, eine Rohrverbindung der gattungsgemäßen Art sowie einen Rahmen so weiterzuentwickeln, dass er konstruktiv einfachst aufgebaut ist, universell einsetzbar und mit geringem Aufwand und kostengünstig montier- und demontierbar ist.

Diese Aufgabe wird durch einen Rohrverbinder mit den Merkmalen des Anspruchs 1 sowie einen Rahmen mit den Merkmalen des Anspruchs 8 gelöst.

Der neue Rohrverbinder, der bevorzugt in Profilrohren Verwendung findet, die einen mehreckigen insbesondere rechteckigen Querschnitt aufweisen, mit einer im Querschnitt rechteckigen zentralen Innenkammer, zeichnet sich zunächst einmal durch seinen äußerst einfachen Aufbau aus, aus dem sich eine sehr kostengünstige Herstellung ergibt.

So können die Deckplatten, ebenso wie der mindestens eine Abstandshalter als Stanzteile aus Blech bestehen, vorzugsweise aus nichtrostendem Stahl oder aus Leichtmetall, beispielsweise aus Aluminium oder einer Aluminiumlegierung.

Der Abstandshalter sowie die beiden Deckplatten liegen nach einem Zusammenbau lose aneinander und sind nur durch Formschlusselemente so miteinander verbunden, dass die Deckplatten parallel zueinander nicht verschoben werden können.

Die Höhe des Rohrverbinders, die sich aus der Breite des Abstandshalters, der als rechteckiges Blech vorliegt, und den addierten Dicken der Deckplatten ergibt, entspricht im Wesentlichen dem zugeordneten lichten Maß der Innenkammer des Profilrohres. In diesem Sinn ist auch die Breite der Deckplatten zu bemessen, so dass sich eine weitgehend spielfreie Lage des Rohrverbinders im Profilrohr ergibt.

Als Formschlusselemente können an den Abstandshalter angeformte Zungen vorgesehen sein, die in in die Deckplatten eingestanzte Schlitze eingesteckt sind, wobei, bei geringem Untermaß der Schlitze in ihrer Breite und/oder Länge gegenüber den Zungen auch jeweils eine Presspassung hergestellt werden kann, so dass der Abstandshalter quer zur parallelen Verschieberichtung der Deckplatten reibschlüssig mit diesen verbunden ist. Allerdings ist dies für die Funktion des Rohrverbinders nicht zwingend. Bestenfalls wird dadurch eine Transporterleichterung geschaffen, wenn der Rohrverbinder werksseitig vormontiert wird.

Gegenüber dem Stand der Technik ist der neue Rohrverbinder quasi universell einsetzbar und hinsichtlich der Grundrissform der Deckplatten an die gewünschte Verbindung anzupassen. D.h., der Rohrverbinder kann, je nachdem wieviel bzw. unter welchen Winkel Rohre endseitig miteinander verbunden werden sollen, entsprechend modifiziert werden, so dass zwei fluchtend zueinander stehende Rohre ebenso miteinander verbunden werden können, wie zwei oder mehr winklig zueinander stehende. In diesem Fall sind die Profilrohre im Anlagebereich auf Gehrung geschnitten, üblicherweise unter einem Winkel von 45°, so dass sich Rahmen ergeben, deren Rahmenholme rechtwinklig zueinander stehen.

Dabei sind die Eckverbinder, je nach Anzahl der zu verbindenden Rohre im Grundriss als Rechteck, L- oder T-förmig ausgebildet, bei vier rechtwinklig zueinander stehenden Rohren nimmt der Eckverbinder die Form eines Kreuzes ein.

Zur Verbindung mit den Profilrohren, durch die ein sicherer Halt der Rahmenholme zueinander und damit der gesamten Konstruktion des Rahmens geschaffen wird, sind in den Deckplatten und/oder dem Abstandshalter Aufnahmen für Verbindungsschrauben vorgesehen, die außenseitig durch die Profilrohre geführt und in diese Aufnahmen eingedreht sind.

Nach einem weiteren Gedanken der Erfindung bestehen die Aufnahmen aus Nietmuttern, deren Gewindeabschnitt in das Innere des Rohrverbinders ragen.

Um eine aus mehreren Rahmen bestehende Wand herzustellen, bei der die Rahmenholme an benachbarten Rahmenholmen anderer Rahmen anliegen, sind sowohl in dem jeweiligen Rahmenholm wie auch in Deckplatten und/oder dem Abstandshalter deckungsgleiche Durchgangsbohrungen vorgesehen zur Aufnahme einer Schraube, bevorzugt einer Schlossschraube, so dass die beiden aneinander liegenden, also gedoppelten Rahmenholme fest miteinander verbunden werden können. Dadurch ergibt sich ein äußerst stabiler Verbund.

Beispielsweise können Rahmen gemäß der Erfindung zu Wänden für Messestände aufgebaut werden, wobei in den Rahmenholmen Öffnungen vorgesehen sein können, die der Einführung von Kabeln dienen, um z.B. eine Standbeleuchtung zu betreiben, wobei die Kabel innerhalb der Rahmenholme, also von außen her nicht sichtbar geführt werden.

Des Weiteren können, um eine geschlossene Wand bereitstellen zu können, in den Rahmenholmen Ausnehmungen vorgesehen sein, insbesondere schlüssellochartige, in die Schraubenköpfe von Schrauben einhängbar sind, die an einem den jeweiligen Rahmen flächig verschließendes Paneel gehalten sind. Alternativ dazu besteht auch die Möglichkeit in den Rahmenholm Schrauben mit Köpfen einzudrehen und zur Aufhängung eines Paneels darin besagte schlüssellochartige Ausnehmungen vorzusehen. Die Schrauben sind dabei bevorzugt in in den Rahmenholm eingebrachte Nietmuttern eingedreht. Damit kann sehr einfach durch Einhängen der Paneelen eine optisch äußerst ansprechende Wand geschaffen werden.

Gegenüber den aus dem Stand der Technik bekannten Rahmen sind solche gemäß der Erfindung bereitgestellten nicht nur einfach und kostengünstig herstellbar, sondern in relativ kurzer Zeit zu kompletten Wänden montierbar.

Weitere vorteilhafte Ausbildungen der Erfindung sind in den Unteransprüchen gekennzeichnet.

Ein Ausführungsbeispiel eines erfindungsgemäßen Rohrverbinders sowie eines damit hergestellten Rahmens wird nachfolgend anhand der beigefügten Zeichnungen beschrieben.

Es zeigen:
- Figur 1: einen erfindungsgemäßen Rohrverbinder in einer perspektivischen Ansicht,
- Figur 2: den Rohrverbinder in einer Explosionsdarstellung,
- Figur 3: einen Teilausschnitt eines Rahmens gemäß der Erfindung, gleichfalls perspektivisch dargestellt,
- Figur 4: einen fertiggestellten Rahmen, ebenfalls schaubildlich dargestellt.

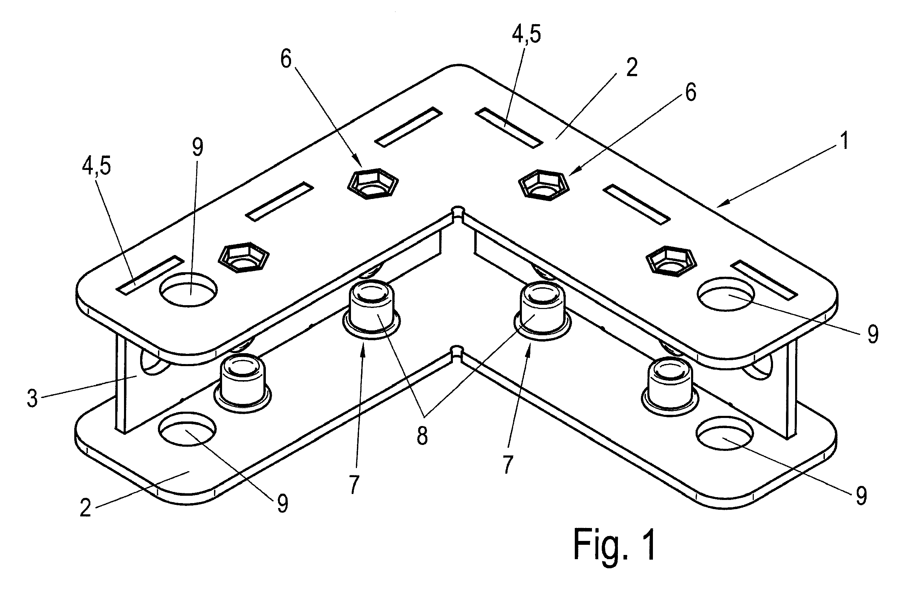

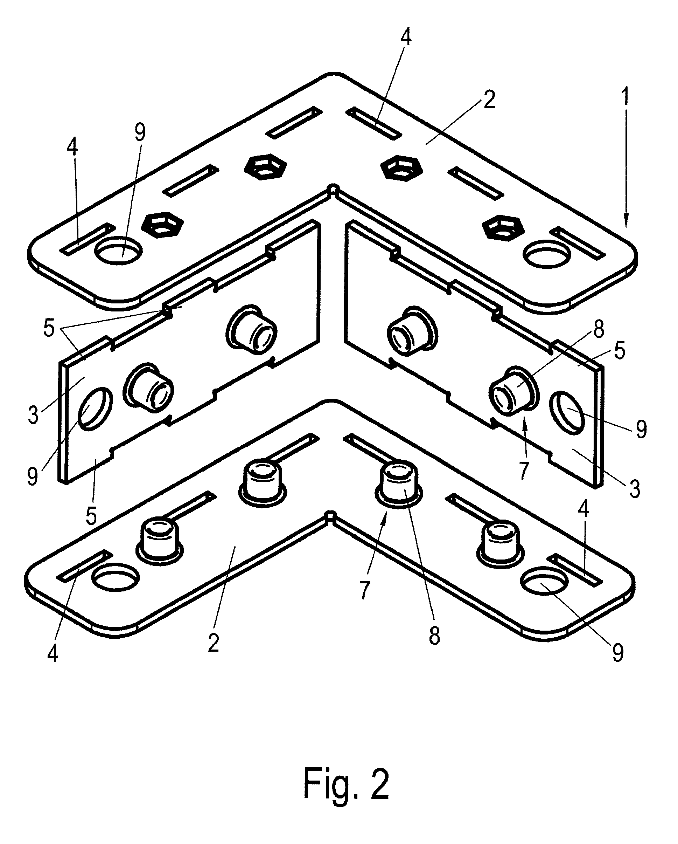

In den Figuren 1 und 2 ist ein Rohrverbinder 1 abgebildet, der in die einander zugewandten Endbereiche von Rohren, insbesondere Profilrohren, einsteckbar ist. Gemäß der Erfindung weist dieser Rohrverbinder 1 zwei identische Deckplatten 2 auf, mit im Beispiel einem L-förmigen Grundriss.

Zwischen den beiden Deckplatten 2 sind, jedem Schenkel der Deckplatten 2 zugeordnet, Abstandshalter 3 vorgesehen, die zur Sicherung gegen ein paralleles Verschieben in die beiden Deckplatten 2 formschlüssig eingreifen. Hierzu weist jeder Abstandshalter 3 angeformte Zungen 5 auf, die in ausgestanzte Schlitze 4 der Deckplatten 2 eingesteckt sind, wobei die Deckplatten 2 sowie die Abstandshalter 3 als Blech-Stanzteile ausgebildet sind.

Die Deckplatten 2, ebenso wie die Abstandshalter 3 sind mit Aufnahmen für Verbindungsschrauben versehen, wobei diese Aufnahmen aus Nietmuttern 7 bestehen, mit einem Mehrkantkopf, der in ein Loch 6 der Deckplatten 2 bzw. des Abstandshalters 3 eingepresst ist, um eine Verdrehsicherung zu erreichen. Ein Schaft 8 mit Innengewinde der Nietmutter 7 ragt in den durch die Abstandshalter 3 gebildeten Innenraum des Rohrverbinders 1.

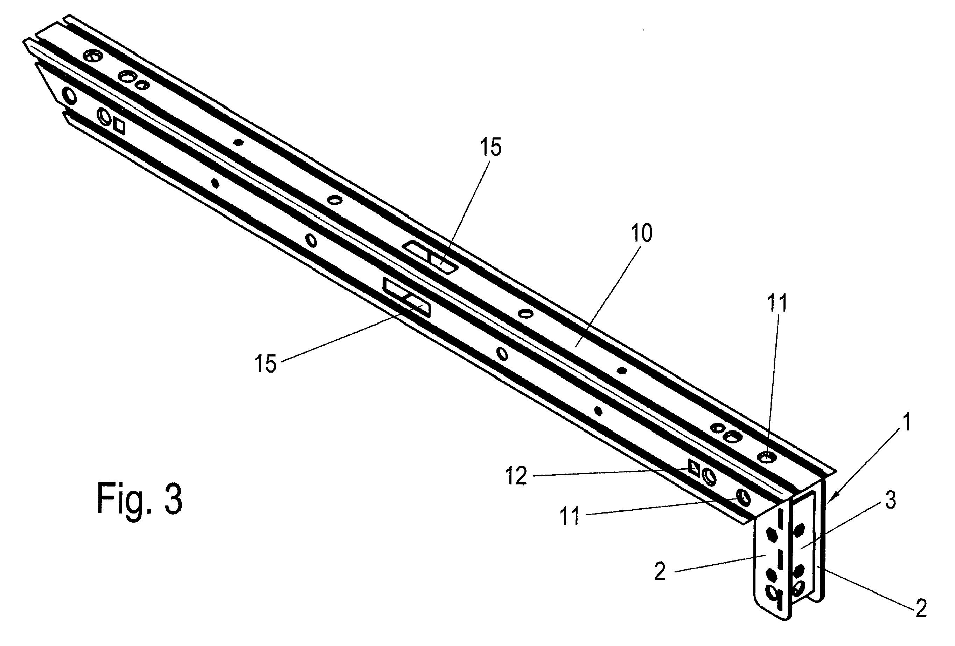

In der Figur 3 ist ein Rohrverbinder 1, gemäß der Figur 1, als in ein einen Rahmenholm 10 bildendes Profilrohr eingesteckt dargestellt, das eine im Querschnitt den Außenabmaßen des Rohrverbinders 1 angepasste Innenkammer aufweist zur Aufnahme des Rohrverbinders 1. Dieser Rahmenholm 10 ist mit Durchgangsbohrungen 11 versehen, durch die in die Nietmuttern 7 eingedrehte Schrauben geführt sind.

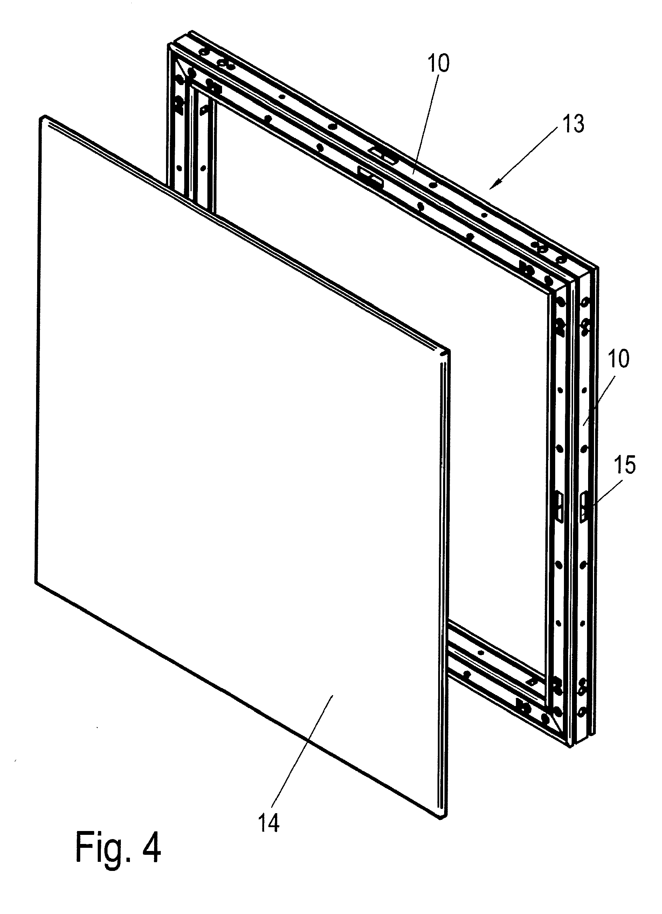

Neben Ausklinkungen 15, die beispielsweise einer Kabeleinführung dienen, sind in den Rahmenholm 10 Durchgangsbohrungen 12 eingebracht, die, wie die Figur 3 sehr deutlich wiedergibt, zumindest an einer Fläche des Rahmenholms 10 im Sinne eines Vierkants ausgebildet sind, zur Durchführung einer Schlossschraube. Damit ist eine Verbindung komplettierter Rahmen 13 (Figur 4) mit anderen Rahmen 13 möglich, wobei diese Schlossschrauben auch durch den jeweiligen Rohrverbinder 1 geführt sind, wozu dieser sowohl in den Deckplatten 2 wie auch in den Abstandshaltern 3 Durchgangslöcher 9 aufweist.

Durch diese Schraubverbindung wird ein sehr hoch belastbarer Verbund der Rahmen und Rahmenholme erreicht.

In der Figur 4 ist, wie erwähnt, ein aus Rahmenholmen 10 zusammengesetzter Rahmen 13 dargestellt, bei dem die stirnseitig auf Gehrung geschnittenen Rahmenholme 10 rechtwinklig zueinander stehen.

Um ein Wandelement mit zumindest einer geschlossenen Seite ausbilden zu können, ist ein Paneel 14 mit dem Rahmen 13 verbunden, wozu die Rahmenholme 10 schlüssellochförmige Aufnahmen für Schraubenköpfe von Schrauben aufweisen, die mit dem Paneel 14 verbunden sind. Denkbar sind jedoch auch andere Möglichkeiten der Verbindung des Paneels 14 mit dem Rahmen 13, beispielsweise am Paneel 14 vorgesehene Abkantungen, die in Längsnuten oder dergleichen der Rahmenholme 10 eingreifen.

## Patentansprüche

1. Rohrverbinder, der in die einander zugewandten und stirnseitig aneinander liegenden Endbereiche von Rohren, insbesondere Profilrohren einsteckbar ist und der zwei parallel und abständig zueinander angeordnete Deckplatten (2) und mindestens einen Abstandshalter (3) aufweist, der zur Verschiebesicherung mit den Deckplatten (2) verbunden ist, wobei die Deckplatten (2) und/oder der Abstandshalter (3) Aufnahmen für Verbindungsschrauben aufweisen, **dadurch gekennzeichnet, dass** der Abstandshalter (3) ausschließlich formschlüssig und zerstörungsfrei lösbar mit den Deckplatten (2) verbunden ist.

2. Rohrverbinder nach Anspruch 1, **dadurch gekennzeichnet, dass** die Deckplatten (2) zumindest im Grundriss identisch sind.

3. Rohrverbinder nach Anspruch 1 oder 2, **dadurch gekennzeichnet, dass** die Deckplatten (2) L-, T- oder kreuzförmig oder rechteckig ausgebildet sind.

4. Rohrverbinder nach einem der vorhergehenden Ansprüche, **dadurch gekennzeichnet, dass** der Abstandshalter (3) auf seinen den Deckplatten (2) zugewandten Kanten angeformte Zungen (5) aufweist, die in Schlitze (4) der Deckplatten (2) eingesteckt sind.

5. Rohrverbinder nach einem der vorhergehenden Ansprüche, **dadurch gekennzeichnet, dass** die Abmaße der Schlitze (4) etwa den zugeordneten Abmaßen der Zungen (5) entsprechen.

6. Rohrverbinder nach einem der vorhergehenden Ansprüche, **dadurch gekennzeichnet, dass** als Aufnahmen für die Verbindungsschrauben in die Deckplatten (2) und/oder den Abstandshalter (3) Nietmuttern (7) verdrehsicher eingesetzt sind.

7. Rohrverbinder nach einem der vorhergehenden Ansprüche, **dadurch gekennzeichnet, dass** der ein Innengewinde aufweisende Schaft (8) der Nietmutter (7) in den Innenraum des Rohrverbinders (1) ragt.

8. Aus mehreren Rahmenholmen (10) bestehender Rahmen (13), wobei die Rahmenholme (10) mit ihren auf Gehrung geschnittenen Stirnseiten aneinander liegen, **dadurch gekennzeichnet, dass** jeweils zwei Rahmenholme (10) durch einen Rohrverbinder (1) nach Anspruch 1 miteinander verbunden sind.

9. Rahmen nach Anspruch 8, **dadurch gekennzeichnet, dass** jeder Rahmenholm (10) aus einem Profilrohr gebildet ist, mit einer Innenkammer, deren Querschnittsabmaße den äußeren Abmaßen des Rohrverbinders (1) entsprechen.

10. Rahmen nach Anspruch 8 oder 9, **dadurch gekennzeichnet, dass** jeder Rahmenholm (10) Durchgangsbohrungen (11) aufweist, die deckungsgleich mit die Nietmuttern (7) aufnehmenden Bohrungen (6) der Deckplatten (2) und/oder des Abstandshalters (3) sind.

11. Rahmen nach einem der Ansprüche 8-10, **dadurch gekennzeichnet, dass** jeder Rahmenholm (10) Durchgangslöcher (11) aufweist, die deckungsgleich zu Bohrungen (9) in den Deckplatten (2) und/oder dem Abstandshalter (3) angeordnet sind und durch die zur Verbindung mit einem weiteren Rahmen (13) Schrauben, insbesondere Schlossschrauben führbar sind.

12. Rahmen nach einem der Ansprüche 8-11, **dadurch gekennzeichnet, dass** jeder Rahmenholm (10) eine Ausklinkung (15) aufweist, zur Einführung von Kabeln oder dergleichen.

13. Rahmen nach einem der Ansprüche 8-12, **dadurch gekennzeichnet, dass** zumindest ein Rahmenholm (10) des Rahmens (13) schlüssellochförmige Ausnehmungen aufweist, in die Schraubenköpfe formschlüssig eingreifen, von Schrauben, die mit einem den Rahmen (13) überdeckenden Paneel (14) verbunden sind.
